# FASCICULE DE BREVET EUROPEEN

(11) **EP 4 540 541 B1**
(45) Date de publication et mention de la délivrance du brevet: **08.04.2026**
(21) Numéro de dépôt: 23732925.5
(22) Date de dépôt: 14.06.2023
(51) Int. Cl.: F16K 15/06, F16K 17/04, B64D 37/32

(54) **CLAPET ANTI-RETOUR POUR SYSTEME DE DISTRIBUTION DE GAZ D'UN AERONEF, SYSTEME CORRESPONDANT**
RÜCKSCHLAGVENTIL FÜR DAS GASVERTEILUNGSSYSTEM EINES FLUGZEUGS, ENTSPRECHENDES SYSTEM
NON-RETURN VALVE FOR AN AIRCRAFT GAS DISTRIBUTION SYSTEM, CORRESPONDING SYSTEM

(30) Priorité: 15.06.2022 FR 2205834
(43) Date de publication de la demande: 23.04.2025
(73) Titulaire: Safran Aerosystems, 78370 Plaisir (FR)
(72) Inventeur: VOZY, Thibaut, 77550 MOISSY-CRAMAYEL (FR)
(74) Mandataire: Cabinet Boettcher
(86) Numéro de dépôt international: PCT/EP2023/066027
(87) Numéro de publication internationale: WO 2023/242305

(56) Documents cités:
- WO-A1-2022/048867
- DE-U1- 20 300 159
- US-A1- 2014 021 398
- US-B1- 11 098 817
- US-B2- 11 241 653

## Description

L'invention concerne un système de distribution de gaz d'un aéronef comprenant un clapet anti-retour.

### ARRIERE PLAN DE L'INVENTION

Dans un aéronef, pour des questions de sécurité, il est connu d'associer un système de distribution de gaz d'inertage à un ou plusieurs réservoirs de carburant dudit aéronef. Le système de distribution de gaz d'inertage, encore appelé système d'inertage, génère ainsi un gaz d'inertage (azote, dioxyde de carbone ...) qui est ensuite injecté dans le ou les réservoirs afin d'en réduire le risque d'explosion.

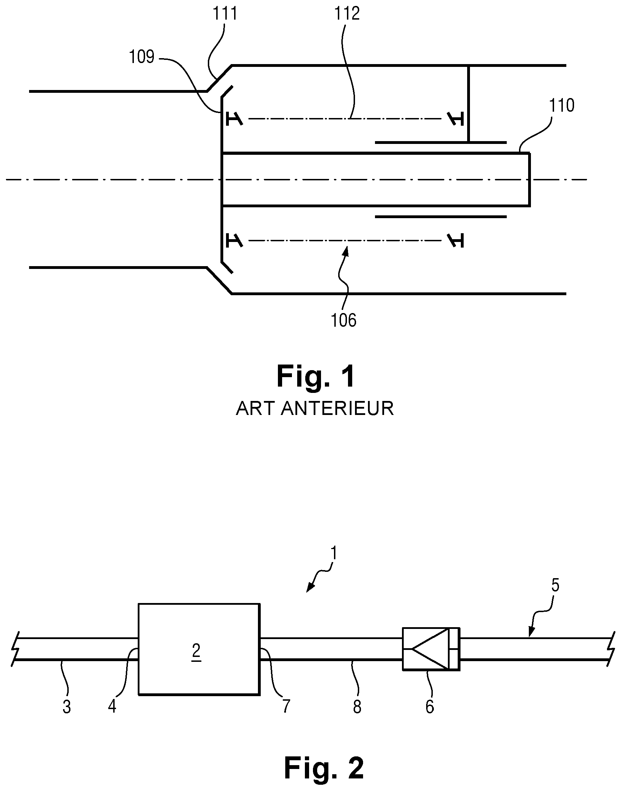

Le système d'inertage comporte au moins une conduite circulant entre le générateur de gaz dudit système et le ou les réservoirs visés pour la circulation du gaz d'inertage. Une telle conduite est usuellement équipée d'un clapet anti-retour 106 tel qu'illustré à la figure 1. Un tel clapet anti-retour 106 comprend ainsi une soupape 109 munie d'une tige de commande 110, soupape 109 coulissant entre :
- une position de fermeture où la soupape 109 repose sur un siège 111 d'un corps du clapet anti-retour 106, et
- une position d'ouverture où la soupape 109 est décalée du siège 111.

Un ressort 112 est par ailleurs agencé de sorte que sa première extrémité soit liée à la soupape 109 et sa deuxième extrémité au corps du clapet anti-retour 106 afin de maintenir la soupape 109 en position de fermeture.

Ainsi, le clapet anti-retour 109 autorise le passage du gaz d'inertage en direction des réservoirs mais limite un risque que du carburant sous forme de vapeur ne puisse remonter depuis les réservoirs jusqu'au générateur de gaz. Malheureusement, le passage du gaz d'inertage à travers le clapet anti-retour 109 a tendance à générer des oscillations au sein du clapet anti-retour 109 qui s'use ainsi rapidement et nécessite un changement régulier pour des questions évidentes de sécurité. Un clapet anti-retour similaire est connu depuis DE 203 00 159 U1.

Sur un autre aspect, il se trouve que le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique. Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

### OBJET DE L'INVENTION

Un but de l'invention est ainsi de proposer un clapet anti-retour pour système de distribution de gaz d'un aéronef qui s'use moins rapidement.

### RESUME DE L'INVENTION

A cet effet, on prévoit un système de distribution de gaz d'un aéronef comprenant un clapet anti-retour, le clapet comprenant une soupape munie d'une tige de commande de la soupape, la soupape étant destinée à coulisser le long d'un premier axe entre une position de fermeture où la soupape coopère en service avec un siège du système de distribution et une position d'ouverture où la soupape est décalée du siège, le clapet comprenant au moins un premier ressort agencé à l'extérieur de la tige de commande et tendant en service à maintenir la soupape contre le siège.

Selon l'invention, le clapet comprend un ensemble comprenant au moins une masselotte et au moins un deuxième ressort qui sont agencés au moins en partie à l'intérieur de la tige de commande, le ressort étant lié à une première de ses deux extrémités à la tige de commande et à une deuxième de ses deux extrémités à la masselotte. Un logement est ménagé dans la tige de commande de sorte à être débouchant à une première extrémité axiale au niveau d'une première extrémité de la tige de commande, opposée à celle reliée à la soupape, et de sorte à être borgne à une deuxième extrémité axiale opposée à la première extrémité axiale.

L'ensemble formé par la soupape et le premier ressort forme un premier système masse/ressort qui a tendance à entrer en oscillations lors du passage du gaz à travers lui. De façon avantageuse, l'ensemble formé par la masselotte et le deuxième ressort forme un deuxième système masse/ressort qui vont également pouvoir entrer en oscillations mais en opposition de phase vis-à-vis du premier système masse/ressort de sorte que les déplacements globaux du clapet anti-retour (hors déplacements principaux entre la position d'ouverture et la position de fermeture) sont très fortement réduits.

En conséquence, le clapet anti-retour de l'invention s'use moins rapidement.

Le clapet anti-retour de l'invention est ainsi plus fiable. De façon avantageuse, le clapet anti-retour est d'une fabrication facilitée.

De plus, il est possible d'adapter des clapets anti-retour existants en évidant au moins en partie leur tige de commande.

En outre, l'invention permet d'éviter que le clapet anti-retour ne s'use trop rapidement ce qui limite sa fréquence de changement. L'invention participe ainsi à l'amélioration des performances de l'aéronef équipé d'un tel clapet anti-retour et en ce sens contribue à la réduction de l'impact environnemental dudit aéronef. Optionnellement, la tige de commande n'est que partiellement creusée.

Optionnellement, la tige de commande s'étend longitudinalement selon le premier axe, le logement s'étend coaxialement à ce premier axe.

Optionnellement, le deuxième ressort est fixé à sa première extrémité à une face de la tige de commande qui a pour normale l'axe selon lequel s'étend longitudinalement la tige de commande.

Optionnellement, le clapet anti-retour comporte des moyens de guidage de la masselotte relativement à la tige de commande.

Optionnellement, le clapet anti-retour comporte des moyens de guidage de la masselotte relativement à la tige de commande en translation selon un axe longitudinal de la tige de commande.

Optionnellement, les moyens de guidage comportent au moins une bague de guidage agencée à l'intérieur de la tige de commande et à travers laquelle la masselotte se déplace relativement à la tige de commande.

Optionnellement la masselotte et la tige de commande sont conformés pour autoriser un laminage de l'air entre la masselotte et la tige de commande lorsque la masselotte se déplace relativement à la tige de commande.

L'invention concerne également un système de distribution de gaz d'un aéronef comprenant un clapet tel que précité. Optionnellement, le système de distribution est un système de distribution de gaz d'inertage.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
La figure 1 a déjà été introduite et illustre schématiquement un clapet anti-retour de l'art antérieur.
La figure 2 représente schématiquement un système de distribution d'un gaz d'inertage dans un aéronef selon un mode de réalisation particulier de l'invention.
La figure 3 illustre schématiquement un clapet anti-retour du système représenté à la figure 2, le clapet anti-retour étant en position de fermeture.
La figure 4 illustre schématiquement le clapet représenté à la figure 3, le clapet anti-retour étant en position d'ouverture.
La figure 5 illustre schématiquement une variante du clapet anti-retour représenté à la figure 3.

### DESCRIPTION DETAILLEE DE L'INVENTION

La figure 2 illustre un système 1 de génération d'un gaz dans un aéronef. Le système 1 est par exemple un système de génération d'un gaz d'inertage.

Le système 1 est associé à au moins un réservoir de carburant d'un aéronef pour y injecter un gaz inerte comme par exemple un gaz de ou à base de : azote, dioxyde de carbone ...

De façon connue en soi, le système 1 comporte un générateur 2 de gaz d'inertage comprenant un circuit d'air à appauvrir en oxygène pour générer du gaz d'inertage enrichi en azote. A cet effet, le système 1 comporte des moyens d'alimentation 3 en air raccordés à au moins une entrée 4 du générateur 2, l'air étant de l'air de purge détourné d'au moins un moteur de l'aéronef et/ou de l'air d'une cabine de passagers de l'aéronef et/ou de l'air extérieur à l'aéronef. Par ailleurs, le système 1 comporte des moyens de distribution 5 du gaz d'inertage dans le ou les réservoirs de carburant, lesdits moyens étant raccordés à au moins une sortie 7 du générateur 2.

Un tel générateur 2 est bien connu de l'art antérieur et ne sera pas détaillé ici.

Par ailleurs, les moyens de distribution 5 comportent au moins une conduite 8 dans laquelle est destinée à circuler le gaz d'inertage. La conduite 8 est équipée d'au moins un clapet anti-retour 6.

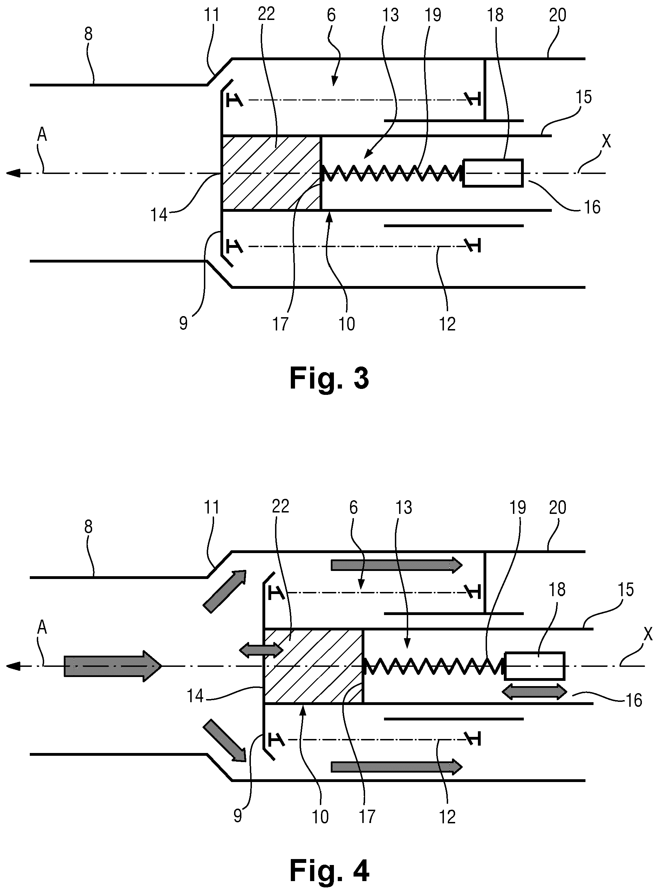

En référence aux figures 3 et 4, le clapet anti-retour 6 comprend une soupape 9 munie d'une tige de commande 10 de la soupape 9.

La tige de commande 10 s'étend rectilignement selon un premier axe X. La tige de commande 10 est ici conformée en un cylindre de révolution de hauteur s'étendant selon le premier axe X.

La soupape 9 s'étend rectilignement de manière coaxiale à la tige de commande 10 selon le premier axe X.

Optionnellement, le clapet anti-retour 6 est agencé dans la conduite 8 de sorte que le premier axe X soit parallèle et optionnellement confondu avec l'axe A rectiligne selon lequel s'étend la portion de la conduite 8 dans laquelle est agencé le clapet anti-retour 6.

La soupape 9 est agencée de sorte à coulisser le long du premier axe X entre :
- une position de fermeture où la soupape 9 coopère en service avec un siège 11 du système 1 (par exemple en reposant sur le siège 11) pour fermer la conduite 8 et ainsi empêcher que du carburant (notamment sous forme de vapeurs) ne remonte depuis le ou les réservoirs jusqu'au générateur 2 (comme illustré à la figure 3), et
- une position d'ouverture où la soupape 9 est décalée du siège 11 et permettre le passage du gaz d'inertage depuis le générateur 2 jusqu'au réservoir de carburant (comme illustré à la figure 4).

Par exemple le siège 11 est un siège de la conduite 8 ou bien le siège 11 est un siège d'un corps 20 du clapet anti-retour 6.

Dans ce dernier cas, la soupape 9 est agencée dans le corps du clapet anti-retour 6 de sorte à coulisser le long du premier axe X entre :
- la position de fermeture où la soupape 9 coopère en service avec le siège 11 du corps 20 (par exemple en reposant sur le siège 11), et
- une position d'ouverture où la soupape 9 est décalée du siège 11.

La tige de commande 10 est de préférence associée à un ou plusieurs organes de guidage en translation de la tige de commande 10 (non représentés ici) et par exemple associée à un ou plusieurs paliers de guidage et/ou une ou plusieurs bagues de guidage.

Cela permet de faciliter le coulissement de la soupape 9 entre les deux positions précitées.

Par ailleurs, le clapet anti-retour 6 comprend un premier ressort 12 agencé à l'extérieur de la tige de commande 10. Le premier ressort 12 s'étend ainsi de manière à entourer la tige de commande 10 en s'étendant longitudinalement selon le premier axe X. Le premier ressort 12 est agencé de sorte que sa première extrémité soit liée à la soupape 9 et sa deuxième extrémité au corps 20 et/ou à la conduite 8.

Typiquement la première extrémité du premier ressort 12 repose sur la face de la soupape 9 à laquelle est déjà fixée la tige de commande 10. Typiquement la première extrémité du premier ressort 12 est fixée à ladite face de la soupape 9 à laquelle est déjà fixée la tige de commande 10.

Le premier ressort 12 est agencé pour contraindre la soupape 9 dans sa position de fermeture. Ainsi, la position d'équilibre de la soupape 9 est celle de fermeture. Seule la circulation du gaz d'inertage peut ainsi s'opposer temporairement à l'action exercée par le premier ressort 12 sur la soupape 9 de manière à la déplacer de sa position de fermeture à sa position d'ouverture.

On note que le premier ressort 12 a une influence sur le différentiel de pression appliqué au clapet anti-retour 6 entrainant l'ouverture de la soupape 9 (i.e. son passage de la position d'ouverture à la position de fermeture) et/ou a une influence sur l'écoulement du gaz traversant le clapet anti-retour 6 et donc des oscillations de la soupape 9. On peut ainsi choisir le premier ressort 12 notamment pour définir à quel différentiel de pression exercée sur la soupape 9 celle-ci doit s'ouvrir.

Par ailleurs, la tige de commande 10 comporte au moins une portion creuse. Typiquement la tige de commande 10 comporte au moins un tronçon creux.

De préférence, la tige de commande 10 n'est pas creuse sur toute sa longueur (considérée selon le premier axe X).

On comprend donc que la tige de commande comprend une portion pleine 22. Typiquement la portion pleine 22 est conformée sous la forme d'un tronçon plein.

Ladite portion pleine 22 est conformée de sorte que de préférence ladite portion pleine 22 présente une longueur (considérée selon le premier axe X) qui est significativement supérieure à l'épaisseur (toujours selon le premier axe X) d'au moins la face d'extrémité de la soupape 9 venant en appui contre le siège 11.Par exemple, la tige de commande 10 est pleine au moins au niveau de sa première extrémité 14 d'attache à la soupape 9 et est creuse au moins au niveau de sa deuxième extrémité 15 opposée à celle d'attache à la soupape 9.

La tige de commande 10 présente ainsi un logement 13 débouchant à une deuxième extrémité axiale 16 (selon le premier axe X) au niveau la deuxième extrémité 15 de la tige de commande 10 et borgne à sa première extrémité 17 axiale opposée à sa deuxième extrémité axiale 16.

Le clapet anti-retour 6 comporte par ailleurs une masselotte 18 agencée dans le logement 13 et de préférence entièrement agencé dans le logement 13. La masselotte 18 est donc invisible depuis l'extérieur de la tige de commande 10. La masselotte 18 est par exemple conformée en un bloc, tel qu'un bloc en matière métallique.

Le clapet anti-retour 6 comporte par ailleurs un deuxième ressort 19 qui est également agencé dans le logement 13 et de préférence entièrement agencé dans le logement 13. Le deuxième ressort 19 est donc invisible depuis l'extérieur de la tige de commande 10. Le deuxième ressort 19 est ici agencé de sorte à être solidaire de la masselotte 18 à une première extrémité et à être solidaire de la tige de commande 10 à une deuxième extrémité. Le deuxième ressort 19 s'étend donc également lui-même longitudinalement selon le premier axe X.

On comprend donc que le premier ressort 12 et le deuxième ressort 19 s'étendent coaxialement entre eux et à la tige de commande 10 et au premier axe X.

Plus précisément ici, le deuxième ressort 19 est fixé à sa première extrémité à la portion pleine 22 de la tige de commande 10 et à sa deuxième extrémité à la masselotte 18. Typiquement le deuxième ressort 19 est solidaire à sa première extrémité à une face de la portion pleine 22 ayant pour normale le premier axe X.

La masselotte 18 est optionnellement agencée dans le clapet anti-retour 6 plus éloigné de la soupape 9 que le deuxième ressort 19.

On retient ainsi que la masselotte 18 est agencée dans le prolongement (selon le premier axe X) de la soupape 9. En particulier, la soupape 9 comme la masselotte 18 s'étendent coaxialement entre eux et au premier axe X.

On note également que le clapet anti-retour 6 est tel que la masselotte 18 est décalée d'une paroi interne cylindrique du logement de la tige de commande 10.

En référence à la figure 2, lorsque le gaz d'inertage force l'ouverture de la soupape 9, le premier ensemble formé par la soupape 9 et le premier ressort 12 peut entrer en oscillations. Néanmoins le deuxième ensemble formé par la masselotte 18 et le deuxième ressort 19 peut également entrer en oscillation mais en opposition de phase du premier ensemble de sorte à annuler en partie ou en totalité les oscillations du premier ensemble et notamment de la soupape 9.

On retient que la masselotte 18 oscille majoritairement selon un mouvement de translation le long du premier axe X.

En particulier, le deuxième ensemble oscille (au moins majoritairement) relativement à la conduite 8 dans le même axe (ici le premier axe X) que la soupape 9 mais en opposition de phase vis-à-vis d'elle.

Dès lors, on comprend que la réduction des oscillations dans le clapet anti-retour 6 est obtenue par la génération d'au moins un effort mécanique appliqué à la soupape 9 par le deuxième ensemble. Le gaz d'inertage en lui-même n'a pas ou peu d'influence dans la réduction des oscillations. De préférence, on définit le deuxième ensemble (par exemple la raideur du deuxième ressort 19 et/ou la masse de la masselotte 18) de sorte que l'effort appliqué par le deuxième ressort 19 sur la soupape 9 soit sensiblement identique à l'effort appliqué par l'écoulement du gaz dans la conduite 8 sur la soupape 9 (encore appelé effort d'excitation).

De préférence, on définit le deuxième ensemble (par exemple la raideur du deuxième ressort 19 et/ou la masse de la masselotte 18) de sorte que la constante de temps caractéristique des oscillations du deuxième ensemble soit sensiblement identique à la constante de temps caractéristique des oscillations du premier ensemble.

Par « sensiblement identique » on entend « identique » à l'autre valeur ou « le plus proche possible » de l'autre valeur. De préférence, par « sensiblement identique » on entend qu'une première valeur est identique à plus ou moins 5% à la deuxième valeur.

On comprend donc que la définition du deuxième ensemble (notamment la raideur du deuxième ressort 19 et/ou la masse de la masselotte 18) est directement liée aux caractéristiques du premier ensemble (en particulier la raideur du premier ressort 12 et/ou la masse de la soupape 9).

Bien entendu, l'invention n'est pas limitée au mode de réalisation décrit mais englobe toute variante entrant dans le champ de l'invention telle que définie par les revendications.

En particulier, un plus grand nombre de clapets anti-retour pourront être agencés dans la conduite.

Le clapet anti-retour pourra comporter un plus grand nombre de ressorts et/ou de masselotte que ce qui a été indiqué. Par exemple le clapet anti-retour pourra comporter deux ensembles masselotte/ressort agencés en série ou en parallèle à l'intérieur de la tige de commande. Par exemple le clapet anti-retour pourra comporter un autre ressort agencé de manière similaire au premier ressort pour en assurer la redondance. Ledit autre ressort comportera ainsi une première extrémité liée à la soupape et une deuxième extrémité liée à la conduite ou au corps du clapet anti-retour. Par exemple le clapet anti-retour pourra comporter un ressort additionnel agencé de manière similaire au deuxième ressort pour en assurer la redondance. Le ressort additionnel comportera ainsi une première extrémité liée à la soupape et une deuxième extrémité liée à la soupape. Le jeu radial entre la masselotte et la paroi interne de la tige de commande pourra être différent de ce qui a été décrit. Par exemple, le jeu radial pourra être plus faible de sorte que la masselotte soit guidée en translation selon le premier axe X par la paroi interne. Par exemple, la masselotte et la paroi interne pourront être configurées de sorte à permettre un laminage de l'air circulant entre eux lors du coulissement de la masselotte vis-à-vis de la tige de commande. Typiquement la masselotte pourra être conformée extérieurement de la même manière que la paroi interne, l'espace entre la masselotte et la paroi interne étant ainsi très mince et régulier.

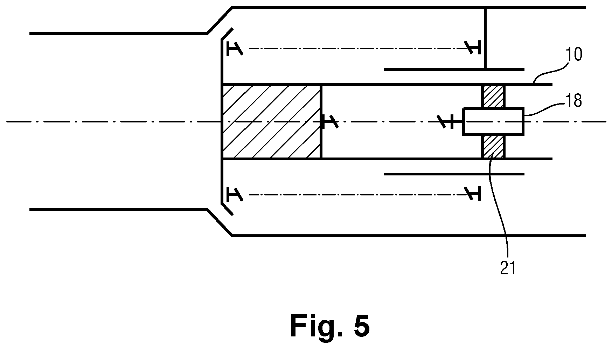

Bien qu'ici l'ensemble masselotte/deuxième ressort permette de contrer (au moins en partie) les oscillations de l'ensemble soupape/premier ressort, l'ensemble masselotte/deuxième ressort pourra être conformé pour permettre également d'assurer un amortissement d'au moins un mouvement d'au moins l'ensemble masselotte/deuxième ressort. Comme indiqué ci-dessus, le clapet anti-retour pourra ainsi être conformé de sorte à assurer un laminage de l'air circulant entre la soupape et la paroi interne. Le clapet pourra également comporter des moyens de guidage de la masselotte dans la tige de commande. La figure 5 illustre ainsi une variante de l'invention dans laquelle la masselotte 18 est associée à des moyens de guidage 21 de la masselotte 18 dans la tige de commande 10. Les moyens de guidage pourront être un ajustement particulier entre la masselotte et la tige de commande comme indiqué précédemment (permettant par exemple un laminage de l'air) et/ou pourront comporter au moins un élément mécanique de guidage à l'intérieur duquel la masselotte se déplace tel qu'un palier ou bien encore une bague. Ceci limiterait un risque d'influencer la valeur de la pression de craquage du clapet anti-retour.

Le clapet anti-retour sera ainsi conformé pour que de préférence, la masselotte se déplace au maximum selon un mouvement de translation le long du premier axe X, tout comme la soupape. De préférence, les moyens de guidage seront conformés pour n'autoriser qu'une translation de la masselotte à l'intérieur de la tige de commande selon le premier axe X.

Bien qu'ici le clapet anti-retour soit agencé dans la conduite de sorte que le premier axe X soit parallèle et confondu avec l'axe A, le clapet anti-retour pourra être agencé autrement dans la conduite et par exemple :
- de sorte que le premier axe X soit parallèle mais non confondu avec l'axe A,
- de sorte que le premier axe X soit incliné vis-à-vis de l'axe A.

Au sein d'un même clapet anti-retour, un nombre différent de ressorts que ce qui a été indiqué pourra être présent. La masselotte pourra être agencée dans le clapet anti-retour plus proche de la soupape que le deuxième ressort. Bien qu'ici le système de distribution du gaz soit un système de distribution d'un gaz d'inertage associé à au moins un réservoir de l'aéronef, l'invention est transposable à de nombreuses autres applications. Le système de distribution de gaz pourra ainsi être un système d'alimentation en oxygène de l'aéronef, un système de ventilation de l'aéronef, un système de pressurisation d'au moins un réservoir en carburant de l'aéronef ...

## Revendications

1. Système de distribution de gaz d'un aéronef comprenant un clapet anti-retour, le clapet comprenant une soupape (9) munie d'une tige de commande (10) de la soupape, la soupape étant destinée à coulisser le long d'un premier axe (X) entre une position de fermeture où la soupape coopère en service avec un siège (11) du système de distribution et une position d'ouverture où la soupape est décalée du siège, le clapet comprenant au moins un premier ressort (12) agencé à l'extérieur de la tige de commande et tendant en service à maintenir la soupape contre le siège, le clapet comprenant un ensemble comprenant au moins une masselotte (18) et au moins un deuxième ressort (19) qui sont agencés au moins en partie à l'intérieur de la tige de commande, le deuxième ressort étant lié à une première de ses deux extrémités à la tige de commande et à une deuxième de ses deux extrémités à la masselotte, un logement (13) étant ménagé dans la tige de commande (10) de sorte à être débouchant à une première extrémité axiale au niveau d'une première extrémité de la tige de commande, opposée à celle reliée à la soupape, et de sorte à être borgne à une deuxième extrémité axiale opposée à la première extrémité axiale.

2. Système selon la revendication 1, dans lequel la tige de commande (10) n'est que partiellement creusée.

3. Système selon la revendication 1 ou la revendication 2, dans lequel la tige de commande (10) s'étend longitudinalement selon le premier axe (X), le logement (13) s'étend coaxialement à ce premier axe.

4. Système selon l'une des revendications 1 à 3, dans lequel le deuxième ressort (19) est fixé à sa première extrémité à une face de la tige de commande (10), face qui a pour normale l'axe selon lequel s'étend longitudinalement la tige de commande.

5. Système selon l'une des revendications précédentes, comprenant des moyens de guidage (21) de la masselotte (18) relativement à la tige de commande (10).

6. Système selon la revendication 5, dans lequel les moyens de guidage comportent au moins une bague de guidage agencée à l'intérieur de la tige de commande (10) et à travers laquelle la masselotte (18) se déplace relativement à la tige de commande.

7. Système selon l'une quelconque des revendications précédentes, dans lequel la masselotte (18) et la tige de commande (10) sont conformées pour autoriser un laminage de l'air entre la masselotte et la tige de commande lorsque la masselotte se déplace relativement à la tige de commande.

8. Système selon l'une des revendications précédentes, dans lequel le système de distribution est un système de distribution de gaz d'inertage.

## Patentansprüche

1. Gasverteilungssystem eines Luftfahrzeugs, umfassend ein Rückschlagventil, wobei das Ventil eine Klappe (9) mit einer Betätigungsstange (10) zum Betätigen der Klappe umfasst, wobei die Klappe zwischen einer Schließstellung, in welcher die Klappe im Einsatzzustand mit einem Sitz (11) des Verteilungssystems zusammenwirkt, und einer Öffnungsstellung, in welcher die Klappe von dem Sitz beabstandet ist, entlang einer ersten Achse (X) hin und her gleitend verschiebbar ist, wobei das Ventil zumindest eine erste außerhalb der Betätigungsstange angeordnete Feder (12) umfasst, die im Einsatzzustand dazu dient, die Klappe gegen den Sitz gedrückt zu halten, wobei das Ventil eine Anordnung aus zumindest einem Gewicht (18) und zumindest einer zweiten Feder (19) umfasst, die zumindest teilweise im Inneren der Betätigungsstange angeordnet sind, wobei die zweite Feder an einem ersten ihrer beiden Enden mit der Betätigungsstange und an einem zweiten ihrer beiden Enden mit dem Gewicht verbunden ist, wobei eine Aufnahme (13) derart in der Betätigungsstange (10) ausgebildet ist, dass sie an einem ersten axialen Ende im Bereich eines ersten Endes der Betätigungsstange, welches dem mit dem Ventil verbundenen Ende entgegengesetzt ist, offen ist und an einem zweiten axialen Ende, das dem ersten axialen Ende entgegengesetzt ist, blind ist.

2. System nach Anspruch 1, wobei die Betätigungsstange (10) nur teilweise hohl ist.

3. System nach Anspruch 1 oder nach Anspruch 2, wobei sich die Betätigungsstange (10) in Längsrichtung entlang der ersten Achse (X) erstreckt, wobei sich die Aufnahme (13) koaxial zu dieser ersten Achse erstreckt.

4. System nach einem der Ansprüche 1 bis 3, wobei die zweite Feder (19) mit ihrem ersten Ende an einer Seite der Betätigungsstange (10) befestigt ist, deren Normale jene Achse darstellt, entlang welcher sich die Betätigungsstange in Längsrichtung erstreckt.

5. System nach einem der vorhergehenden Ansprüche, umfassend Führungsmittel (21) zur Führung des Gewichts (18) relativ zu der Betätigungsstange (10).

6. System nach Anspruch 5, wobei die Führungsmittel zumindest einen Führungsring enthalten, der im Inneren der Betätigungsstange (10) angeordnet ist und durch welchen hindurch sich das Gewicht (18) relativ zu der Betätigungsstange bewegt.

7. System nach einem der vorhergehenden Ansprüche, wobei das Gewicht (18) und die Betätigungsstange (10) derart ausgebildet sind, dass sie eine laminare Luftströmung zwischen dem Gewicht und der Betätigungsstange ermöglichen, wenn sich das Gewicht relativ zu der Betätigungsstange bewegt.

8. Anordnung nach einem der vorhergehenden Ansprüche, wobei es sich bei dem Verteilungssystem um ein Inertgas-Verteilungssystem zum Zweck der Inertisierung handelt.

## Claims

1. A gas distribution system of an aircraft comprising a check valve, the valve comprising a valve body (9) provided with a control rod (10) of the valve body, the valve being intended to slide along a first axis (X) between a closed position in which the valve engages in use with a seat (11) of the distribution system and an open position in which the valve body is moved away from the seat, the valve comprising at least one first spring (12) arranged outside the control rod and tending in use to hold the valve body against the seat, the valve comprising an assembly comprising at least one weight (18) and at least one second spring (19) which are arranged at least partially inside the control rod, the second spring being connected at a first of its two ends to the control rod and at a second of its two ends to the weight, a housing (13) being provided in the control rod (10) so as to open at a first axial end at a first end of the control rod, opposite to that connected to the valve body, and so as to be blind at a second axial end opposite to the first axial end.

2. The system according to Claim 1, wherein the control rod (10) is only partially hollowed out.

3. The system according to Claim 1 or Claim 2, wherein the control rod (10) extends longitudinally along the first axis (X), the housing (13) extends coaxially to the first axis.

4. The system according to any one of Claims 1 to 3, wherein the second spring (19) is fixed at its first end to one side of the control rod (10), the side whose normal is the axis along which the control rod extends longitudinally.

5. The system according to any one of the preceding claims, comprising means of guiding (21) the weight (18) relative to the control rod (10).

6. The system according to Claim 5, wherein the guiding means comprise at least one guiding ring arranged within the control rod (10) and through which the weight (18) moves relative to the control rod.

7. The system according to any one of the preceding claims, wherein the weight (18) and the control rod (10) are shaped to allow laminar air flow between the weight and the control rod when the weight moves relative to the control rod.

8. The system according to any one of the preceding claims, wherein the distribution system is a system for distributing inerting gas.
